# EUROPEAN PATENT APPLICATION

(11) **EP 4 793 725 A1**
(43) Date of publication of application: **19.08.2026**
(21) Application number: 26157850.4
(22) Date of filing: 11.02.2026
(51) Int. Cl.: G05B 19/418

(54) **HIGH-RESOLUTION VIRTUAL VEHICLE PRESENCE SENSOR**

(30) Priority: 14.02.2025 US 202519053937
(71) Applicant: Disney Enterprises, Inc., Burbank, CA 91521 (US)
(72) Inventor: Kwo, Sylvester Venansius, Orlando (US); Burns, Stephen, Orlando (US); Myerson, Sarah Julia, Windermere (US); Walters, Brian Foster, Groveled (US); Tschanz, Michael, Orlando (US); Hofer, Alicia, Ocoee (US); Bulnes, Rolando, Winter Garden (US); Burbank, Brandyn Dean, Windermere (US)
(74) Representative: Sona, Alessandro

(57) **Abstract**

Methods and systems for a high-resolution virtual vehicle presence sensor are discussed herein. For example, the virtual sensor system may include a plurality of sensors analyzing a known path and configured to determine path-based vehicle data corresponding to a path-based vehicle, wherein each sensor of the plurality of sensors is positionally independent of each other sensor in the plurality of sensors. The virtual sensor system may further include a processing element configured to receive the path-based vehicle data from the plurality of sensors, calculate infilling kinematic data of the path-based vehicle at positions between the plurality of sensors based on the path-based vehicle data and known path information corresponding to the known path, and generate a visualization of the infilling kinematic data, the path-based vehicle data, and the known path information. The virtual sensor system may further include a display configured to display the visualization.

## Description

### FIELD

The present disclosure relates generally to systems and methods for determining and analyzing path-based vehicle data.

### BACKGROUND

Amusement parks, manufacturing facilities, mailrooms, warehouses, and various industries use path-based vehicles to provide experiences for guests or increase efficiency in the production, transportation, and storage of goods. For example, path-based vehicles may be used to transport users on a roller coaster, organize and/or deliver products in a warehouse, transport parts and goods on an assembly line, or sort mail within a warehouse.

However, current path-based vehicles and the data received from the path-based vehicles are deficient in numerous ways. For example, sensors are placed only in select places/segments across the path used by the path-based vehicles, providing low-resolution data that is hard to analyze, for example, to determine a location of the path-based vehicle when between low-resolution sensors. Such existing sensing systems are particularly deficient when the path-based vehicle needs to be analyzed in between sensor placements. It may be hard to decipher and/or visualize vehicle states and errors from the low-resolution data obtained from the sparsely placed sensors. Attempts to correct these deficiencies by adding more physical sensors are also deficient, as placing numerous physical sensors along the path is cost prohibitive to maintain, wire, and control.

### BRIEF SUMMARY

Aspects and features of the present disclosure are set out in the appended claims.

### OVERVIEW OF DISCLOSURE

In one embodiment, a virtual sensor system for a path system including a known path and a path-based vehicle configured to travel along the known path includes: a plurality of sensors distributed along the known path and configured to determine vehicle data corresponding to a path-based vehicle, wherein each sensor of the plurality of sensors is positionally independent of each other sensor in the plurality of sensors; and a processing element configured to: receive vehicle data from the plurality of sensors as the path-based vehicle travels along the known path, and determine infilling kinematic data representative of the path-based vehicle at one or more positions between the plurality of sensors based on the vehicle data and known path characteristics corresponding to the known path, wherein the infilling kinematic data and the vehicle data is used to generate a system model of the path system.

Optionally, in some embodiments, the known path comprises a physical path. In some such embodiments, the physical path comprises at least one of a track, an assembly line, or a belt mechanism.

Optionally, in some embodiments, the known path comprises a virtual path. In some such embodiments, the virtual path comprises at least one of waypoints, global positioning system (GPS) points, or pre-programmed pathing.

Optionally, in some embodiments, the processing element is further configured to generate a visualization of the system model of the path system based on the infilling kinematic data, the vehicle data, and the known path characteristics, and wherein the virtual sensor system further comprises a display configured to display the visualization. In some such embodiments, the display is further configured to display a past visualization of past infilling kinematic data and past vehicle data. In some such embodiments, the processing element is further configured to predict infilling kinematic data, and wherein the display is further configured to display a future visualization of the predicted infilling kinematic data and predicted vehicle data.

Optionally, in some embodiments, the known path characteristics comprises one or more of a path deflection, a path length, a position of the plurality of sensors on the known path, a known path speed limit, or known path angles.

Optionally, in some embodiments, the processing element comprises a hardware-in-the-loop (HIL) simulation used for the determination.

Optionally, in some embodiments, the processing element is further configured to generate a warning message when threshold parameters of the infilling kinematic data are met or exceeded.

In one embodiment, a method for a path system including a known path and a path-based vehicle configured to travel along the known path includes: receiving first vehicle data from a first sensor analyzing the known path at a first position and second vehicle data from a second sensor analyzing the known path at a second position as the path-based vehicle travels along the known path; determining third vehicle data based on the first vehicle data and the second vehicle data and based on known path characteristics corresponding to the known path, wherein the third vehicle data comprises vehicle data between the first position and the second position; and generating a combined visualization of the first vehicle data, the second vehicle data, and the third vehicle data for output, wherein the combined visualization comprises a system model of the path system.

Optionally, in some embodiments, the combined visualization further comprises the known path and the path-based vehicle traveling on the known path.

Optionally, in some embodiments, the method further comprises receiving visualization user preference information, wherein generating the combined visualization is further based on the user preference information.

Optionally, in some embodiments, the method further comprises storing the combined visualization for future review.

Optionally, in some embodiments, the method further comprises: comparing the first vehicle data, the second vehicle data and the third vehicle data to threshold parameters; and in response to determining whether at least one of the first vehicle data, the second vehicle data, or the third vehicle data exceed or meet the threshold parameters, generate a warning message.

Optionally, in some embodiments, determining the third vehicle data is based on using a hardware-in-the-loop (HIL) for the determination.

Optionally, in some embodiments, the known path comprises a physical path or a virtual path.

Optionally, in some embodiments, determining the third vehicle data is based on using an artificial intelligence/machine learning (AI/ML) algorithm.

Optionally, in some embodiments, the further comprises generating at least one of a past combined visualization based on past vehicle data or a predicted future combined visualization based on predicted vehicle data.

### BRIEF DESCRIPTION OF THE DRAWINGS

FIG. 1 illustrates a simplified schematic of a system for determining infilling data and generating a visualization of the infilling data, and data received from sensors, according to embodiments herein.
FIG. 2 illustrates an example visualization generated by the system, according to embodiments herein.
FIG. 3 illustrates a method for determining virtual sensor data, according to embodiments herein.
FIG. 4 illustrates a simplified block diagram of components of a computing system of the system of FIG. 1 according to embodiments herein.

### DETAILED DESCRIPTION

Embodiments disclosed provide for high-resolution virtual vehicle presence sensors based on low-resolution physical presence sensors. In some examples, the present disclosure provides for generating infilling data between low-resolution physical sensors placed sparsely along a vehicle path (e.g., the sensors are positionally independent of each other with a certain distance between sensors ranging from a few centimeters to a few hundred meters), producing high-resolution data of the path-based vehicle. Low-resolution data received from the physical sensors may be understood as detailing only a portion of the vehicle path, while high-resolution data may be understood as detailing all or nearly an entire vehicle path. Additionally, embodiments herein provide methods and systems for visualizing the infilled data with the data received from the low-resolution physical sensors. The entire path of the path-based vehicle may be visualized, for example, for troubleshooting and analysis. Examples of a path may include physical paths like tracks, belts, assembly lines, and/or virtual paths like pre-programmed pathways, waypoints, and global positioning system (GPS) point pathways. Examples of path-based vehicles may include entertainment experience passenger carts (e.g., ride vehicles), flat-bed carts, transportation vehicles, logistics equipment like forklifts, and/or drones, etc.

In some embodiments, data may be received from the physical sensors coupled to or placed sparsely on the path of the path-based vehicle. In many embodiments, the sensors are only placed every few meters or feet on the path and cannot cover the entire path, thus producing low-resolution data. The sensors may obtain various data about the path or the path-based vehicle. Examples of such sensors include force sensors, speed sensors, proximity sensors, inductive sensors, through-beam sensors, light curtain sensors, deflection or strain sensors, etc. The data obtained by the sensors may take various forms such as kinematic data (e.g., position, velocity, acceleration), load data, weight data, stopping data, torque data, path data when the path-based vehicle is in use (e.g., path deflection under the weight of the path-based vehicle), trajectory, and other various data of the sort pertaining to the path or path-based vehicle. In many embodiments, a physical sensor may generate data that indicates only the presence or absence of the path-based vehicle (e.g., Boolean data). While embodiments herein discuss sensors coupled to the path, it should be understood that the sensors may be receiving data about and analyzing the path and/or the path-based vehicle while not being physically attached to the path. The sensors may be placed next to or a certain distance away from the path and/or path-based vehicle while still receiving data.

In many embodiments, previously known or derivable path information may be provided to the system for use in calculating the infilling data. For example, the path information may include the distance of the path, angles in turns of the path, path limits, path speed limits, path load limits, number of turns/loops in the path, and/or path materials parameters.

In some embodiments, the system may utilize the low-resolution data from the physical sensors sparsely coupled to the path used by the path-based vehicle, and the path information to calculate infilling high-resolution data of the path-based vehicle between the sensors (e.g., blind spot of the sensors where the sensors cannot measure the path or the path-based vehicle). The calculated infilling high-resolution data may be understood as being obtained from a virtual sensor that uses the physical sensor low-resolution data with path information to calculate data describing substantially the entire path and movement of the path-based vehicle across substantially the entire path. As such, according to embodiments herein, physical sensors need not be placed across the entire path, thus reducing the cost of maintaining the path and path-based vehicle as physical sensors are expensive and costly to maintain and implement. At the same time, according to embodiments herein, it is possible to produce accurate data that describes the path-based vehicle motion along the path with desired resolution and fidelity.

For example, the system may calculate infilling kinematic data of the path-based vehicle between the sensors such as a position, a velocity, and/or an acceleration of the path-based vehicle in time based on the low-resolution data and path information. In some examples, infilling data of the path between the sensors may be calculated based on the low-resolution data and path information. As such, the combination of the calculated infilling data and the data received from the sensors may be understood as high-resolution data that describes substantially the entire path and the path-based vehicle as it moves across substantially the entire path.

In some cases, artificial intelligence/machine learning (AI/ML) algorithms may be used to calculate the infilling data. Further, the calculated infilling data and data from the sensors may be used to further train the AI/ML algorithms as to achieve a higher degree of accuracy. In some instances, the AI/ML algorithms may be used to determine why certain errors occurred or may provide suggestions on how to modify the path or path-based vehicle so that the error does not repeatedly occur.

In some embodiments, the generated infilling data and the data received from the sensors may be processed to generate a visualization of, for example, the path, the path-based vehicle, the sensors and/or any data pertaining to the path and/or the path-based vehicle. In some instances, the generation of the visualization may be understood as a generation of a digital system model of the path and/or the path-based vehicle. The visualization may be generated and shown in-real time, or close to in-real time as to account for any processing delay. In some instances, the visualization may be generated using user preferences (e.g., what data and/or calculations to include in the visualization). For example, a user may desire for the visualization to include the path-based vehicle, a visualization of the path, and only the velocity and load of the path-based vehicle. In another example, the user may desire for the visualization to include the path-based vehicle, the physical sensors, the data collected by the sensors, and the calculated infilling data to be in the visualization.

In some examples, a speed profile of the path-based vehicle may be generated to visualize the path-based vehicle at any time. In some cases, the visualization may be adjusted based on an offset error calculation made by the system when a sensor provides data to the system (is triggered by the path-based vehicle passing over the sensor). Additionally, a scaling factor may be applied to the visualization to match the data (e.g., position, velocity) of the visualization with the path-based vehicle as more sensor data is received and infilling data is calculated. In some instances, the system may process the visualization data and provide a notification (e.g., an error/warning message) if the data is not within specified threshold parameters of the path or of the path-based vehicle, or when an error has been detected by the visualization. For example, a notification may be generated if the path-based vehicle is moving too slow or too fast for the path or if the path is deflecting too much due to the weight of the path-based vehicle.

In some embodiments, a user may use the visualization for troubleshooting of the path-based vehicle or for training of another user in techniques for maintaining and running the path and the path-based vehicle. For example, the visualization may include a playback feature, where the user may replay the visualization to analyze data (e.g., the infilling data and data obtained from the sensors) prior to, during, and after an error of the path or of the path-based vehicle occurs. In some examples, the visualization may output a notification message that an error that is currently occurring as the path-based vehicle is in use, or in some cases, possible future errors as predicted by the AI/ML algorithms. In some instances, the visualization and/or the calculated infilling data and the data received from the sensors may be viewed remotely from a location outside of where the path and the path-based vehicle is in use. The visualization may also be used as a way to validate simulations performed on the path and/or path-based vehicle, without fully implementing the path and/or path-based vehicle.

In some embodiments, the infilling data may be calculated and the visualization may be generated using a hardware-in-the-loop (HIL) simulation. For example, the HIL simulation may generate virtual paths and virtual path-based vehicles with the data received from the sensors and information already known or information derivable about the path and/or the path-based vehicle. Further, the HIL simulation may generate the infilling data and use it to generate the visualization. Using the HIL simulation, a user may simulate and test the path and path-based vehicle without having to run or implement the path or path-based vehicle. As such, in some cases, a user may develop a theoretical path and/or path-based vehicle and simulate the theoretical path and path-based vehicle using the HIL simulation. In some examples, the HIL simulation may include a playback feature used to visualize infilling data and data received from the sensors at a previous point in time. Additionally, the HIL simulation may generate a notification notifying a user that, for example, the path-based vehicle has entered a subset of the path, that parameters of the path have been exceeded, or that parameters preconfigured by the user have been exceeded such as track speeds, braking speeds, applied forces etc.

Embodiments herein refer to a path and a path-based vehicle. However, it should be understood that embodiments herein may be applied to multiple path-based vehicles operating on a single path at the same time and applied to multiple paths operating at the same time. The multiple paths may be split up into various tabs of the visualization for organizational purposes. For example, a single visualization may visualize the paths and path-based vehicles of an entire warehouse, of an entire amusement park, or of an entire factory on different tabs of the visualization.

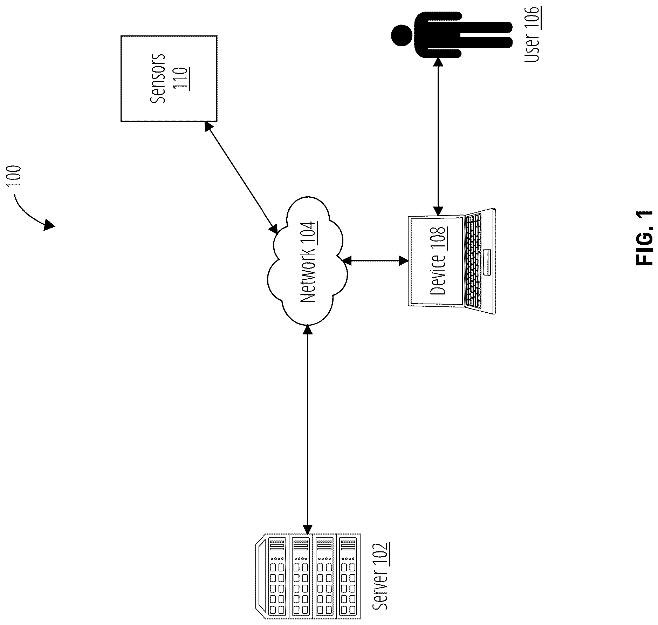

Turning to the figures, FIG. 1 illustrates a simplified schematic of a system for determining infilling data and generating a visualization of the infilling data, and data received from sensors, according to embodiments herein.

The system 100 for calculating infilling data and generating a visualization of the infilling data and data received from sensors is made up of a server 102, a network 104, a device 108, and sensors 110 coupled to a path of the path-based vehicle. A user 106 may operate the device 108.

The sensors 110 coupled to the path of the path-based vehicle may read/obtain various data pertaining to the path and the path-based vehicle as it moves across the path. The sensors 110 may include, for example, force sensors, speed sensors, proximity sensors, inductive sensors, through-beam sensors, light curtain sensor, etc. The data obtained from the sensors 110 may include, for example, kinematic data (e.g., position, velocity, and acceleration), load data, vehicle braking data, stopping distance data, directional data, torque data, weight data, path deflection data, and other similar data. The sensors 110 may transmit the data to the network 104 for use in calculating the infilling data. In some cases, the sensors 110 may receive modification information from the user 106 via the device 108 transmitting to the network 104 to adjust the settings and/or parameters of the sensors 110

In some examples, the network 104 may receive data from the sensors 110. Additionally, the network 104 may derive, or already be provided path information such as the length of the path, the angles of the path, how many turns the path has, the material that the path is made up of, and various other path parameters from the server 102 or from the device 108. Based on the data received from the sensors 110 and the path information, the network 104 may calculate infilling data of the path-based vehicle and how the path is reacting to the path-based vehicle. Such calculation may also be done at the server 102 and/or at the device 108. The infilling data in combination with or independently of the data received from the sensors 110 may be transmitted to the server 102 for storage for future review/troubleshooting.

Contemplate an example where the sensors 110 provide positional data of the path-based vehicle as it travels over the sensors 110. The network 104 may utilize the positional data received from the sensors 110, the known position of the sensors 110, and the path information to calculate infilling data of the path-based vehicle as it travels between the sensors 110. The calculated infilling data may include positional data of the path-based vehicle as it travels between the sensors 110 that is not received from the sensors 110 as the sensors 110 may only determine data corresponding to the path-based vehicle when the path-based vehicle is in the vicinity of the sensors 110.

In some cases, the calculated infilling data and the data received from the sensors 110 may be used to generate a visualization of the data at the network 104. The visualization may be transmitted to the device 108 to be presented to the user 106 or transmitted to the server 102 for storage for future review/troubleshooting. In some cases, the network 104 may receive user 106 preferences from the device 108 that may be used in the generation of the visualization (e.g., what type of sensor data to visualize) or may be used to modify the sensors 110 or modify the calculation of the infilling data as to make the calculation more accurate.

The device 108 may receive the visualization from the network 104 to display to the user 106. In some cases, the user 106 may input user 106 preferences into the device 108 modifying how the visualization is generated (e.g., what data the visualization visualizes). In some other cases, the user 106 may input modifications into the device 108 that may be transmitted to the network 104 that may modify the sensors 110 or how the infilling data is calculated as to make the calculation more accurate.

The server 102 may receive the calculated infilling data and/or the generated visualization from the network 104 for storage. In some cases, the server 102 may transmit previously calculated infilling data and/or previously generated visualizations for reviewing and troubleshooting of past implementations of the path and the path-based vehicle.

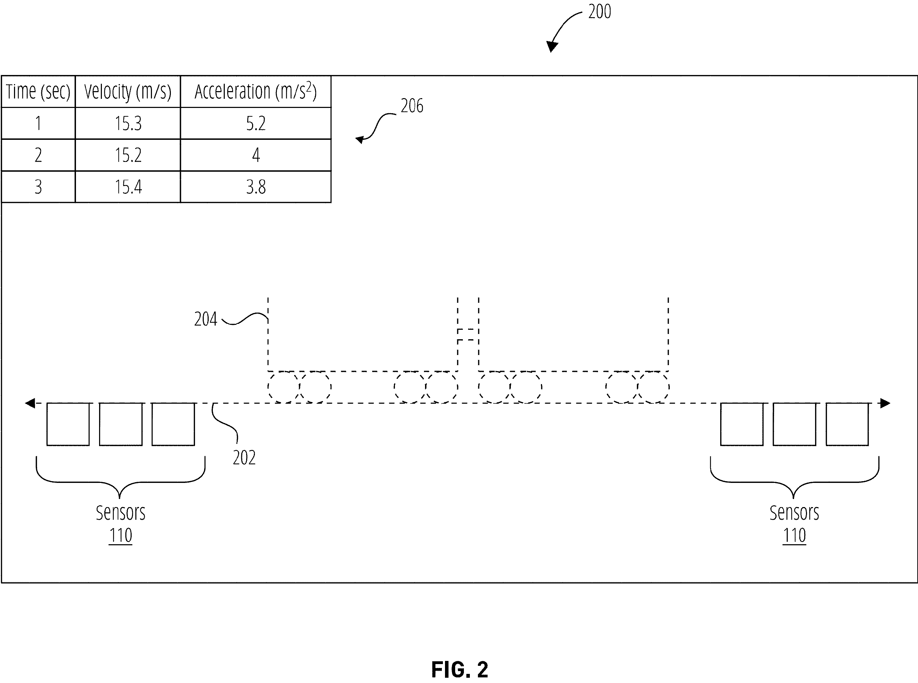

FIG. 2 illustrates an example visualization 200 generated by the system 100, according to embodiments herein.

In some embodiments, a visualization 200 may be generated based on the calculated infilling data (as calculated by the system 100), the data received from the sensors 110 and path information previously known or derivable by the system 100. The visualization 200 may be generated based on user preferences for what data and/or information is to be included in the visualization 200. For example, the visualization 200 may include a visualized path 202, a visualized path-based vehicle 204, and the sensors 110coupled to the path. However, in other examples, the user may choose not to include the visualized path 202 or the sensors 110 in the visualization 200, and as such, the visualization 200 may include only the visualized path-based vehicle 204.

Additionally, the visualization 200 may include data 206 over time according to preferences of the user. For example, the data 206 of the visualization 200 may include the velocity and acceleration of the visualized path-based vehicle 204. It should be understood that the data 206 of the visualization 200 may include various other data such as load, stopping distance, position, weight, path deflection as chosen by the user.

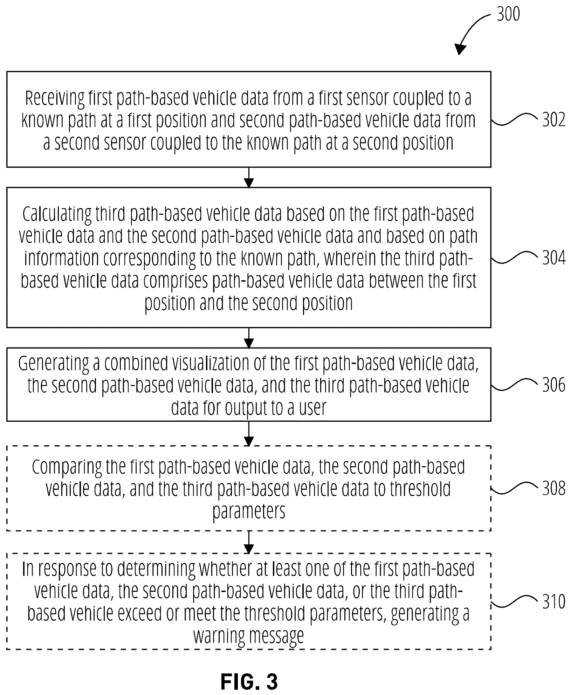

FIG. 3 illustrates a method for determining virtual sensor data, according to embodiments herein. The illustrated method 300 includes receiving 302 first path-based vehicle data from a first sensor coupled to a known path at a first position and second path-based vehicle data from a second sensor coupled to the known path at a second position. The method 300 further includes calculating 304 third path-based vehicle data based on the first path-based vehicle data and the second path-based vehicle data and based on known path information corresponding to the known path, wherein the third path-based vehicle data comprises path-based vehicle data between the first position and the second position. The method 300 further includes generating 306 a combined visualization of the first path-based vehicle data, the second path-based vehicle data, and the third path-based vehicle data for output to a user.

Optionally, in some embodiments, the method 300 further comprises, comparing 308 the first path-based vehicle data, the second path-based vehicle data, and the third path-based vehicle data to threshold parameters, and in response to determining whether at least one of the first path-based vehicle data, the second path-based vehicle data, or the third path-based vehicle exceed or meet the threshold parameters, generating 310 a warning message. For example, a warning message may be generated and outputted to the user if the path-based vehicle is exceeding velocity and/or load tolerances of the known path. In some examples, a warning may be generated if the first path-based vehicle data, the second path-based vehicle data, and/or the path-based vehicle data are trending towards exceeding the threshold parameters. Such trending may be location specific or sensor specific.

In some embodiments of the method 300, the combined visualization further comprises the known path and a path-based vehicle coupled to the known path. For example, the combined visualization may include an animation of the path-based vehicle moving across the known path.

In some embodiments, the method 300 further comprises receiving visualization user preference information, wherein generating the combined visualization is further based on the user preference information. For example, the visualization user preference information may indicate whether the combined visualization is to include the known path, the path-based vehicle, or any data corresponding to the known path or any of the path-based vehicle data. The visualization user preference information may be received at any point in the method, for example, before operation 302, before operation 304, or before operation 306. In some examples, the visualization user preference information may be received after operation 306, and a modified combined visualization of the first path-based vehicle data, the second path-based vehicle data, and the third path-based vehicle data may be generated for output to the user, based on the received visualization user preference information.

In some embodiments, the method 300 further comprises storing the combined visualization or a modified combined visualization (if applicable) for future review. For example, the combined visualization or the modified combined visualization may be stored in a server for review by a user in the future. In some cases, past stored combined visualizations may be used in further review.

In some embodiments of the method 300, calculating the third path-based vehicle data is based on using an HIL simulation used for the calculation. For example, the HIL simulation may generate virtual paths and virtual path-based vehicles with the path-based vehicle data and known path information and calculate the third path-based vehicle data.

In some embodiments of the method 300, the known path comprises a physical path or a virtual path. For example, the physical path may include a track, an assembly line, or a belt mechanism. The virtual path may include waypoints, GPS points, and pre-programmed pathing.

In some embodiments of the method 300, calculating the third path-based vehicle data is based on using an artificial intelligence/machine learning (AI/ML) algorithm. For example, an AI/ML algorithm may be trained on previous correct path-based vehicle data and may be used to generate the third path-based vehicle data or predict third path-based vehicle data.

In some embodiments, the method 300 further comprises generating at least one of a past combined visualization based on past path-based vehicle data or a predicted future combined visualization based on predicted path-based vehicle data. For example, the past combined visualization may be analyzed for past errors or warning of the known path or path-based vehicle. In some cases, the predicted future combined visualization may be used to simulate path-based vehicle behavior on a known path.

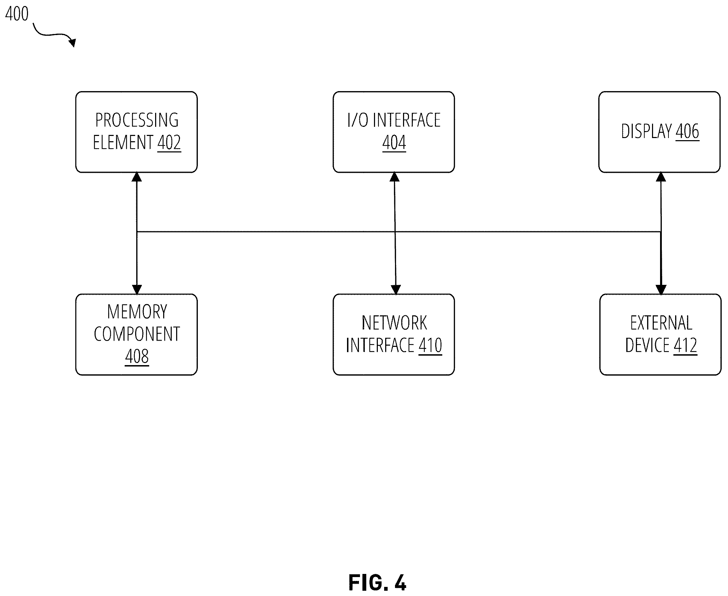

FIG. 4 is a simplified block diagram of components of a computing system 400 of the system 100, such as the server 102, the device 108, the sensors 110 etc. A computing system 400 may include one or more processing elements 402, an input/output I/O interface 404, one or more external devices 412, one or more memory components 408, and a network interface 410. Each of the various components may be in communication with one another through one or more buses or communication networks, such as wired or wireless networks, e.g., the network 104. The components in FIG. 4 are exemplary only. In various examples, the computing system 400 may include additional components and/or functionality not shown in FIG. 4. The processing element 402 and the memory component 408 may be located at one or in several computing systems 400. This disclosure contemplates any suitable number of such computing systems 400. For example, the server 102 may be a desktop computing system, a mainframe, a blade, a mesh of computing systems 400, a laptop or notebook computing system 400, a tablet computing system 400, an embedded computing system 400, a system-on-chip, a single-board computing system 400, or a combination of two or more of these. Where appropriate, a computing system 400 may include one or more computing systems 400; be unitary or distributed; span multiple locations; span multiple machines; span multiple data centers; or reside in a cloud, which may include one or more cloud components in one or more networks.

The processing element 402 may be any type of electronic device capable of processing, receiving, and/or transmitting instructions. For example, the processing element 402 may be a central processing unit, microprocessor, processor, or microcontroller. Additionally, it should be noted that some components of the computing system 400 may be controlled by a first processing element 402 and other components may be controlled by a second processing element 402, where the first and second processing elements may or may not be in communication with each other.

The I/O interface 404 allows a user to enter data in to computing system 400, as well as provides an input/output for the computing system 400 to communicate with other devices or services. The I/O interface 404 can include one or more input buttons, touch pads, touch screens, and so on.

The external device 412 are one or more devices that can be used to provide various inputs to the computing systems 400, e.g., mouse, microphone, keyboard, trackpad, sensing element (e.g., a thermistor, humidity sensor, light detector, etc. The external devices 412 may be local or remote and may vary as desired. In some examples, the external devices 412 may also include one or more additional sensors.

The memory components 408 are used by the computing system 400 to store instructions for the processing element 402, as well as store data. The memory components 408 may be, for example, magneto-optical storage, read-only memory, random access memory, erasable programmable memory, flash memory, or a combination of one or more types of memory components.

The network interface 410 provides communication to and from the computing system 400 to other devices. The network interface 410 includes one or more communication protocols, such as, but not limited to Wi-Fi, Ethernet, Bluetooth, etc. The network interface 410 may also include one or more hardwired components, such as a Universal Serial Bus (USB) cable, or the like. The configuration of the network interface 410 depends on the types of communication desired and may be modified to communicate via Wi-Fi, Bluetooth, etc.

The display 406 provides a visual output for the computing system 400 and may be varied as needed based on the device. The display 406 may be configured to provide visual feedback to the user 106 and may include a liquid crystal display screen, light emitting diode screen, plasma screen, or the like. In some examples, the display 406 may be configured to act as an input element for the user 106 through touch feedback or the like.

The computing system 400 may be include a physical device or separate physical devices including components to read and execute instructions from a machine-readable or computer-readable medium (e.g., a non-transitory machine-readable storage medium).

The description of certain embodiments included herein is merely exemplary in nature and is in no way intended to limit the scope of the disclosure or its applications or uses. In the included detailed description of embodiments of the present systems and methods, reference is made to the accompanying drawings which form a part hereof, and which are shown by way of illustration specific to embodiments in which the described systems and methods may be practiced. These embodiments are described in sufficient detail to enable those skilled in the art to practice presently disclosed systems and methods, and it is to be understood that other embodiments may be utilized, and that structural and logical changes may be made without departing from the spirit and scope of the disclosure. Moreover, for the purpose of clarity, detailed descriptions of certain features will not be discussed when they would be apparent to those with skill in the art so as not to obscure the description of embodiments of the disclosure. The included detailed description is therefore not to be taken in a limiting sense, and the scope of the disclosure is defined only by the appended claims.

From the foregoing it will be appreciated that, although specific embodiments of the invention have been described herein for purposes of illustration, various modifications may be made without deviating from the spirit and scope of the invention.

The particulars shown herein are by way of example and for purposes of illustrative discussion of the preferred embodiments of the present invention only and are presented in the cause of providing what is believed to be the most useful and readily understood description of the principles and conceptual aspects of various embodiments of the invention. In this regard, no attempt is made to show structural details of the invention in more detail than is necessary for the fundamental understanding of the invention, the description taken with the drawings and/or examples making apparent to those skilled in the art how the several forms of the invention may be embodied in practice.

As used herein and unless otherwise indicated, the terms "a" and "an" are taken to mean "one", "at least one" or "one or more". Unless otherwise required by context, singular terms used herein shall include pluralities and plural terms shall include the singular.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to". Words using the singular or plural number also include the plural and singular number, respectively. Additionally, the words "herein," "above," and "below" and words of similar import, when used in this application, shall refer to this application as a whole and not to any particular portions of the application.

Of course, it is to be appreciated that any one of the examples, embodiments or processes described herein may be combined with one or more other examples, embodiments and/or processes or be separated and/or performed amongst separate devices or device portions in accordance with the present systems, devices and methods.

Finally, the above discussion is intended to be merely illustrative of the present system and should not be construed as limiting the appended claims to any particular embodiment or group of embodiments. Thus, while the present system has been described in particular detail with reference to exemplary embodiments, it should also be appreciated that numerous modifications and alternative embodiments may be devised by those having ordinary skill in the art without departing from the broader and intended spirit and scope of the present system as set forth in the claims that follow. Accordingly, the specification and drawings are to be regarded in an illustrative manner and are not intended to limit the scope of the appended claims.

## Claims

1. A virtual sensor system for a path system including a known path and a path-based vehicle configured to travel along the known path comprising:
a plurality of sensors distributed along the known path and configured to determine vehicle data corresponding to the path-based vehicle, wherein each sensor of the plurality of sensors is positionally independent of each other sensor in the plurality of sensors; and
a processing element configured to:
receive vehicle data from the plurality of sensors as the path-based vehicle travels along the known path, and
determine infilling kinematic data representative of the path-based vehicle at one or more positions between the plurality of sensors based on the vehicle data and known path characteristics corresponding to the known path, wherein the infilling kinematic data and the vehicle data is used to generate a system model of the path system.

2. The virtual sensor system of claim 1, wherein the known path comprises a physical path,
optionally wherein the physical path comprises at least one of a track, an assembly line, or a belt mechanism.

3. The virtual sensor system of any preceding claim, wherein the known path comprises a virtual path,
optionally wherein the virtual path comprises at least one of waypoints, global positioning system (GPS) points, or pre-programmed pathing.

4. The virtual sensor system of any preceding claim, wherein the processing element is further configured to generate a visualization of the system model of the path system based on the infilling kinematic data, the vehicle data, and the known path characteristics, and wherein the virtual sensor system further comprises a display configured to display the visualization.

5. The virtual sensor system of claim 4, wherein at least one of:
the display is further configured to display a past visualization of past infilling kinematic data and past vehicle data; or
the processing element is further configured to predict infilling kinematic data, and the display is further configured to display a future visualization of the predicted infilling kinematic data and predicted vehicle data.

6. The virtual sensor system of any preceding claim, wherein the known path characteristics comprises one or more of a path deflection, a path length, a position of the plurality of sensors on the known path, a known path speed limit, or known path angles.

7. The virtual sensor system of any preceding claim, wherein at least one of:
the processing element comprises a hardware-in-the-loop (HIL) simulation used for the determination; or
the processing element is further configured to generate a warning message when threshold parameters of the infilling kinematic data are met or exceeded.

8. A method for a path system including a known path and a path-based vehicle configured to travel along the known path, the method comprising:
receiving first vehicle data from a first sensor analyzing the known path at a first position and second vehicle data from a second sensor analyzing the known path at a second position as the path-based vehicle travels along the known path;
determining third vehicle data based on the first vehicle data and the second vehicle data and based on known path characteristics corresponding to the known path, wherein the third vehicle data comprises vehicle data between the first position and the second position; and
generating a combined visualization of the first vehicle data, the second vehicle data, and the third vehicle data for output, wherein the combined visualization comprises a system model of the path system.

9. The method of claim 8, wherein the combined visualization further comprises the known path and the path-based vehicle traveling on the known path.

10. The method of any of claims 8 to 9, further comprising at least one of:
receiving visualization user preference information, wherein generating the combined visualization is further based on the user preference information; or
storing the combined visualization for future review.

11. The method of any of claims 8 to 10, further comprising:
comparing the first vehicle data, the second vehicle data and the third vehicle data to threshold parameters; and
in response to determining whether at least one of the first vehicle data, the second vehicle data, or the third vehicle data exceed or meet the threshold parameters, generate a warning message.

12. The method of any of claims 8 to 11, wherein determining the third vehicle data is based on using at least one of:
a hardware-in-the-loop (HIL) for the determination; or
an artificial intelligence/machine learning (AI/ML) algorithm.

13. The method of any of claims 8 to 12, wherein the known path comprises a physical path or a virtual path.

14. The method of any of claims 8 to 13, further comprising generating at least one of a past combined visualization based on past vehicle data or a predicted future combined visualization based on predicted vehicle data.

15. A computer-readable medium storing instructions which, when executed by a processing element, cause the processing element to perform the method of any of claims 8 to 14.
